# EUROPÄISCHE PATENTSCHRIFT

(11) **EP 3 890 843 B1**
(45) Veröffentlichungstag und Bekanntmachung des Hinweises auf die Patenterteilung: **28.01.2026**
(21) Anmeldenummer: 19832543.3
(22) Anmeldetag: 04.12.2019
(51) Int. Cl.: A62C 3/07, A62C 3/16, B60L 3/00, A62C 8/06, B60J 11/04

(54) **SICHERUNGSSYSTEM FÜR GEFÄHRLICHES LADEGUT, INSBESONDERE FÜR DEFEKTE ODER VERUNFALLTE ELEKTROFAHRZEUGE, BEHÄLTNIS FÜR SOLCHES UND VERFAHREN ZU DESSEN SICHERUNG**
PROTECTION SYSTEM FOR A HAZARDOUS LOAD, IN PARTICULAR FOR ELECTRIC VEHICLES WHICH ARE DEFECTIVE OR ARE INVOLVED IN AN ACCIDENT, CONTAINER FOR SAID LOAD AND METHOD FOR PROTECTING SAME
SYSTÈME DE PROTECTION POUR CHARGEMENT DANGEREUX, EN PARTICULIER POUR UN VÉHICULE ÉLECTRIQUE DÉFECTUEUX OU ACCIDENTÉ, CONTENANT POUR UN TEL VÉHICULE ET PROCÉDÉ POUR SA PROTECTION

(30) Priorität: 05.12.2018 DE 202018005624 U
(43) Veröffentlichungstag der Anmeldung: 13.10.2021
(73) Patentinhaber: Gelkoh GmbH, 59073 Hamm (DE)
(72) Erfinder: KOHTEN, Markus, 59075 Hamm (DE)
(74) Vertreter: Kayser, Christoph
(86) Internationale Anmeldenummer: PCT/DE2019/000314
(87) Internationale Veröffentlichungsnummer: WO 2020/114536

(56) Entgegenhaltungen:
- WO-A1-2018/178496
- DE-U1- 202015 004 702
- DE-U1- 202018 000 471
- NO-A1- 20 171 690

## Beschreibung

Die Erfindung betrifft ein Sicherungssystem für gefährliches Ladegut, insbesondere für defekte oder verunfallte Elektrofahrzeuge sowie ein Behältnis für solches Ladegut und ein Verfahren zu dessen Sicherung.

Bei defekten oder verunfallten Elektrofahrzeugen, besteht die Gefahr, dass bei deren Bergung oder deren Abtransport die Akkumulatoren für den Betriebsstrom der Antriebseinheit, gemeinhin Lithium-Ionen-Batterien, in Brand geraten oder Gefahrstoffe in die Umwelt abgeben. Dies kann durch einen Unfall, einen technischen Defekt, thermische, mechanische, chemische oder elektrische Einflüsse geschehen. Es besteht auch die Gefahr, dass nach Löschung brennender Akkumulatoren ein erneutes Aufflammen erfolgt. Die einfache, schnelle und effektive Sicherung solchen potentiell gefährlichen Ladeguts, möglichst direkt am Ort des Defekts oder Unfalls, ist daher wünschenswert.

Die Gebrauchsmusterschrift DE 20 2011 000 314 U1 offenbart bereits eine Vorrichtung zur Aufnahme leicht brennbarer Gefahrstoffe, insbesondere beschädigter Lithium-Ionen-Batterien in Form eines Gehäuses mit Wandungen und Deckel, das mit nicht brennbarem, flüssigkeitsresistentem Material ausgekleidet ist und zusammen mit dem Deckel einen flüssigkeitsdichten und feuerfesten Innenraum bildet. Nachteilig ist hierbei, dass ein solches Gehäuse zwar für Lithium-Ionen-Batterien allein geeignet sein mag, für die Sicherung eines vollständigen Elektrofahrzeugs aufgrund der dann erforderlichen Größe des Gehäuses nicht praktikabel ist. Ein Ausbau der Gefahrenquelle, aus einem verunfallten Elektrofahrzeug ist aufwändig und in manchen Fällen aufgrund unfallbedingter Karosserieverformungen auch nicht möglich. Auch die zügige Bereitstellung eines solchen Gehäuses an Unfallorten erscheint ab einer Größe, die die Umhausung eines kompletten Fahrzeugs erlaubt, problematisch. Schließlich zwingt der Deckel an der Oberseite zum Anheben des zu sichernden gefährlichen Ladeguts und wäre im Falle eines vollständigen Elektrofahrzeuges aufwändig. Auch die gummigedichtete Kontaktfläche zwischen der feuerfest ausgelegten Deckelverkleidung und der Auskleidung des Behälterinneren ist ein potentieller Schwachpunkt im Falle starker Hitzeentwicklung. Schließlich sind Gehäuse in für Elektrofahrzeuge passender Größe nicht platzsparend zu lagern, was ihrem breiten Einsatz und ihrer schnellen Verfügbarkeit abträglich ist, da Depots mit entsprechender Lagerfläche zur Verfügung stehen müssten.

Eine weitere bekannte Vorrichtungen zur Brandbekämpfung in Elektrofahrzeugen wird in der NO 20 171 690 A1 offenbart, welche ein Textil offenbart, das im Brandfall rund um das brennende Fahrzeug gewickelt wird, und dann mit einem Löschfluid gefüllt wird.

Die DE 20 2015 004702 U1 offenbart einen Beutel für kleineres Gefahrengut, welches aus einem Material besteht, das Feststoffe zurückhält, wohl aber für Fluide durchlässig ist.

Es stellt sich daher die Aufgabe, ausgehend vom obigem Stand der Technik, ein Sicherungssystem für gefährliches Ladegut, insbesondere für defekte und verunfallte Elektrofahrzeuge bereit zu stellen, das schnell zum Ort des Unfalls oder des Defekts verbracht und platzsparend gelagert werden kann sowie leicht zu handhaben ist, ohne dass Abstriche bei der Sicherheit gemacht werden müssen.

Vorgeschlagen wird daher ein Sicherheitsbehältnis gemäß Anspruch 1 sowie ein Verfahren zur Sicherung gemäß Anspruch 13, wobei sich vorteilhafte Ausgestaltungen aus den jeweiligen Unteransprüchen ergeben. Das Sicherungssystem umfasst das zu sichernde Elektrofahrzeug mit Akkumulatoren für den Betriebsstrom der Antriebseinheit des Elektrofahrzeuges und einen vollständig verschließbaren Sack aus feuerfestem Textilmaterial mit einer Öffnung zur Aufnahme des Elektrofahrzeuges, wobei der Sack im verschlossenen Zustand das Elektrofahrzeug vollständig umschließt, dabei eine Barriere für Feststoffpartikel bildet und dennoch ganz oder bereichsweise für Gase oder Fluide durchlässig ist. Brände oder Explosionen entstehen hauptsächlich durch Funkenflug, der ein entflammbares Gas oder Gasgemisch entzündet. Dadurch, dass der Sack Feststoffpartikel zurückhält, während Gase oder Fluide aus dem Sack austreten können, wird vermieden, dass sich im Inneren des verschlossenen Sacks ein Gas oder Gasgemisch staut und konzentriert, das durch glühende Feststoffpartikel in Brand gesetzt werden kann.

Der Sack kann platzsparend, beispielsweise zusammengerollt, gelagert werden. Am Ort des Defekts des Elektrofahrzeuges oder am Unfallort kann der Sack geöffnet und das Elektrofahrzeug vollständig durch die Öffnung in den Sack eingebracht werden, beispielsweise indem das Elektrofahrzeug auf seinen Rädern in den Sack geschoben wird. Der Sack kann unmittelbar anschließend verschlossen und gegebenenfalls abtransportiert werden. Die Sicherheit hinsichtlich der Brandgefahr lässt sich noch erhöhen, wenn der Sack vor dem Verschließen mit Inertgas befüllt wird.

Vorzugsweise wird das effektive Zurückhalten von glühenden Feststoffpartikeln dadurch erreicht, dass das Textilmaterial, aus dem der Sack gefertigt ist, zumindest in dem oder den für Gase oder Fluide durchlässigen Bereichen der Feststoffbarriere Vliesmaterial aufweist. Vorteilhaft kann das Vliesmaterial sandwichartig als mittlere von drei Lagen des Textilmaterials eingearbeitet sein, wobei die äußeren Lagen beispielsweise Glasfaser-Silikat-Gewebe aufweisen können.

Vorteilhaft kann die Sicherheit des Systems erhöht werden, indem das Textilmaterial reaktive Bestandteile aufweist, die ab einer Temperatur von 150°C feuerbekämpfendes Aerosol und/oder feuerbekämpfende Flüssigkeit in den Innenraum des Sackes freisetzen. Die Sicherheit von Einsatzkräften und anderen Personen kann vorteilhaft auch dadurch erhöht werden, dass die Innenseite des Sackes mit einem oder mehreren fluorwasserstoffneutralisierenden Stoffen, wie beispielsweise Calciumglukonat, imprägniert ist.

Als vorteilhaft hat es sich erwiesen, wenn der Sack eine versteifte Bodenfläche aufweist, die größer ist als die Grundfläche des zu bergenden Elektrofahrzeuges. Dies erleichtert die Orientierung des Sackes und ermöglicht eine häufigere Wiederverwendung des Sackes.

Eine für den beabsichtigten Zweck günstige Verschlussvariante für die Öffnung des Sackes besteht darin, dass der entsprechend ausgestaltete Sack an den Rändern der Öffnung gerollt wird, so dass die Ränder in die gleiche Richtung gerollt übereinander liegen und so für eine gute Abdichtung der Öffnung sorgen.. Fixiert werden können die so gerollten Ränder vorteilhaft mit kevlarummantelten Stahlfäden oder mittels Klettverschluss. Auch gegebenenfalls notwendige Nähte, die der Sack aufweisen kann, wenn er aufgrund seiner Größe nicht einstückig gerfertigt werden kann, können vorteilhaft kevlarummantelte Stahlfäden aufweisen.

Um einen Abtransport des Sicherungssystems zu erleichtern, weist der Sack vorzugsweise Anschlagpunkte, wie beispielsweise Haken oder Ösen, für Lastmittel auf. Das Textilmaterial und die Anschlagpunkte sollten bevorzugt so gewählt sein, dass eine Tragfähigkeit für Lasten von 5000 kg oder mehr gegeben ist, damit auch schwere Elektrofahrzeuge problemlos geborgen werden können. Bevorzugt weist das verwendete Textilmaterial eine elastische Dehnbarkeit von mehr als 10 Prozent auf. Das bedeutet, dass das Textilmaterial in wenigstens eine Richtung zumindest um den Faktor 1,1 gedehnt werden kann und nach der Dehnung wieder seine ursprüngliche Abmessung annimmt. So können vielfach aufgrund eines thermischen Ereignisses gegen die Innenseite des Sacks geschleuderte Teile vorteilhaft durch das Textilmaterial abgefangen werden, ohne dass dieses Schaden nimmt. Für die Wiederverwendbarkeit des Sackes ist es darüber hinaus von Vorteil, wenn dieser eine abriebfeste Außenbeschichtung aufweist, insbesondere eine bodenseitige, schnittfeste Gummierung, die nicht feuerfest sein muss, da eine Wiederverwendung des Sackes nur dann erfolgt, wenn die mittels des Sicherungssystems zu bannende Gefahr nicht eingetreten ist.

Neben dem das zu sichernde Ladegut und den Sack aufweisenden Sicherheitssystem ist bereits ein Behältnis, das allein den Sack des Sicherheitssystems aufweist, zielführend, da solche Behältnisse in Werkstätten, Feuerwehrstationen und anderen Hilfseinrichtungen gelagert werden können. Sie können auch grundsätzlich in Kraftfahrzeugen von Hilfseinsatzkräften gelagert werden, damit eine unmittelbare Sicherung am Einsatzort möglich ist, obwohl der Bedarf für eine solche Sicherung zuvor nicht bekannt war.

Das Verfahren zur Sicherung gefährlichen Ladeguts, welches den Einsatz des Behältnisses oder des Sicherungssystems umfasst, ist dadurch gekennzeichnet, dass in einem ersten Schritt das den Sack aufweisende Behältnis am Ort der Gefahr bereit gestellt wird. In einem zweiten Schritt wird das Behältnis geöffnet, um drittens das Elektrofahrzeug in das Behältnis einbringen zu können. In einem vierten Schritt wird das Behältnis verschlossen und der Abtransport kann beginnen. Bei besonders gefährlich erscheinendem Ladegut, kann das Behältnis nach dem Einbringen des Elektrofahrzeugs und vor dem Verschließen des Behältnisses vorteilhaft mit Inertgas befüllt werden.

Nachfolgend wird die Erfindung anhand der Zeichnungen beispielhaft näher erläutert.

### Legende:

- 1: Sicherungssystem
- 2: Elektrofahrzeug
- 3: Akkumulator
- 4: Antriebseinheit
- 5: Sack
- 6: Textilmaterial
- 7: Öffnung
- 8: Lage (innen)
- 9: Lage (mittig)
- 10: Lage (außen)
- 11: Innneraum
- 12: Innenseite
- 13: versteifte Bodenfläche
- 14: Standfläche
- 15: Naht
- 16: Anschlagpunkte
- 17: Sicherheitsbehältnis

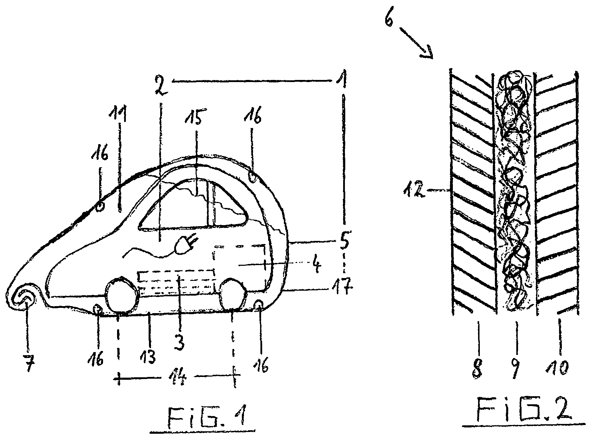

**Fig. 1** zeigt im Schnitt das Sicherheitssystem (1) mit dem bereits in den Innenraum (11) des aus feuerfestem Textilmaterial **(****Fig. 2****, Ziff. 6)** gefertigten Sacks (5) des Sicherheitsbehältnisses (17) eingebrachten Elektrofahrzeug (2), das auf der versteiften Bodenfläche (13) des an seiner Öffnung (7) mittels Aufrollen der Ränder der Öffnung (7) in die gleiche Richtung verschlossenen Sicherheitsbehältnisses (17) steht, das hier eine Naht (15) mit einem kevlarummantelten Stahlfaden und in seinem unteren und oberen Bereich jeweils zwei Ösen als Anschlagpunkte (16) für Lastmittel aufweist. Die Gefahr geht hier von dem im Elektrofahrzeug (2) verbauten Akkumulator (3) für die Antriebseinheit (4) des Elektrofahrzeuges (2) aus. Die durch die Auflagepunkte der Reifen begrenzte Standfläche (14) des Elektrofahrzeuges (2) ist dabei kleiner als die versteifte Bodenfläche (13) des Sicherheitsbehältnisses (16). Vorliegend sind der Sack (5) und das Sicherheitsbehältnis (17) identisch. Möglich ist aber, dass an oder in dem Sack (5) noch Zusatzteile angebracht sind, die dann zusammen mit dem Sack (5) das Sicherheitsbehätlnis (17) konstituieren würden.

**Fig. 2** zeigt einen Abschnitt des Textilmaterials (6), das hier aus einer Innen- (8), einer Mittel- (9) und einer Außenlage (10) aufgebaut ist, wobei die Innenlage (8) an der Innenseite (12) des Sackes (**Fig. 1****, Ziff. 5)** mit Calciumglukonat als fluorwasserstoffneutralisierendem Stoff imprägniert ist. Das Textilmaterial (6) ist hier bis zu einer Belastung von 5000 kg und mehr reißfest ausgelegt und weist eine elastische Dehnbarkeit von mehr als 10 Prozent auf.

## Patentansprüche

1. Sicherheitsbehältnis (1) für defekte oder verunfallte Elektrofahrzeuge (2), die Akkumulatoren (3) für den Betriebsstrom der Antriebseinheit (4) des Elektrofahrzeugs (2) aufweisen,
**gekennzeichnet durch**
einen vollständig verschließbaren Sack (5) aus feuerfestem Textilmaterial (6) mit einer Öffnung (7) zur Aufnahme des Elektrofahrzeugs (2), wobei der Sack (5) in verschlossenem Zustand eine Barriere für Feststoffpartikel bildet und dennoch ganz oder bereichsweise für Gase oder Fluide durchlässig ist und wobei das Textilmaterial (6) reaktive Bestandteile aufweist, die ab einer Temperatur von 150°C feuerbekämpfendes Aerosol und/oder feuerbekämpfende Flüssigkeit in den Innenraum (11) des Sackes (5) freisetzen.

2. Sicherheitsbehältnis (1) nach Anspruch 1,
**dadurch gekennzeichnet,**
**dass** die Innenseite (12) des Sackes (5) mit einem oder mehreren fluorwasserstoffneutralisierenden Stoffen imprägniert ist.

3. Sicherheitsbehältnis (1) nach einem der vorhergehenden Ansprüche,
**dadurch gekennzeichnet,**
**dass** das Textilmaterial (6) zumindest in dem oder den für Gase oder Fluide durchlässigen Bereichen der Barriere Vliesmaterial aufweist.

4. Sicherheitsbehältnis (1) nach einem der vorhergehenden Ansprüche,
**dadurch gekennzeichnet,**
**dass** das Textilmaterial (6) ein Glasfaser-Silikat-Gewebe aufweist.

5. Sicherheitsbehältnis (1) nach einem der vorhergehenden Ansprüche,
**dadurch gekennzeichnet,**
**dass** das Textilmaterial (6) drei Lagen (8, 9, 10) aufweist.

6. Sicherheitsbehältnis (1) nach Anspruch 5,
**dadurch gekennzeichnet,**
**dass** die mittlere (9) der drei Lagen (8, 9, 10) Vliesmaterial aufweist.

7. Sicherheitsbehältnis (1) nach einem der vorhergehenden Ansprüche,
**dadurch gekennzeichnet,**
**dass** der Sack (5) eine versteifte Bodenfläche (13) aufweist, die größer bemessen ist als die durch durch die Auflagepunkte der Fahrzeugreifen begrenzte Standfläche (14) des Elektrofahrzeugs (2).

8. Sicherheitsbehältnis (1) nach einem der vorhergehenden Ansprüche,
**dadurch gekennzeichnet,**
**dass** in geschlossenem Zustand der Öffnung (7) deren Ränder in die gleiche Richtung gerollt übereinander liegen.

9. Sicherheitsbehältnis (1) nach einem der vorhergehenden Ansprüche,
**dadurch gekennzeichnet,**
**dass** der Sack (5) wenigstens eine Naht (15) mit kevlarummantelten Stahlfäden aufweist.

10. Sicherheitsbehältnis (1) nach einem der vorhergehenden Ansprüche,
**dadurch gekennzeichnet,**
**dass** der Sack (5) Anschlagpunkte (16), wie beispielsweise Haken oder Ösen, für Lastmittel und eine Tragfähigkeit für Lasten von 5000 kg oder mehr aufweist, wobei das Textilmaterial (6) wenigstens bis zu einer Belastung des Sacks (5) mit 5000 kg reißfest ausgelegt ist.

11. Sicherheitsbehältnis (1) nach einem der vorhergehenden Ansprüche,
**dadurch gekennzeichnet,**
**dass** das Textilmaterial (6) eine elastische Dehnbarkeit von 10 Prozent oder mehr aufweist.

12. Sicherheitsbehältnis (1) nach einem der vorhergehenden Ansprüche,
**dadurch gekennzeichnet,**
**dass** der Sack (5) eine abriebfeste Außenbeschichtung, insbesondere eine bodenseitige, schnittfeste Gummierung aufweist.

13. Verfahren zur Sicherung gefährlichen Ladeguts, insbesondere defekter oder verunfallter Elektrofahrzeuge (2),
**gekennzeichnet durch folgende Schritte:**
i) Bereitstellung eines Sicherheitsbehältnisses (1);
nach einem der Ansprüche 1 bis 12;
ii) Öffnen des Sicherheitsbehältnisses (1);
iii) Einbringen eines Elektrofahrzeuges (2) in das Sicherheitsbehältnis (1);
iv) Schließen des Sicherheitsbehältnisses (1).

14. Verfahren nach Anspruch 13,
**gekennzeichnet durch folgenden zusätzlichen Schritt zwischen Schritt iii) und iv):**
iii)a Befüllen des Sicherheitsbehältnisses (1) mit Inertgas.

## Claims

1. A safety container (1) for defective or crashed electric vehicles (2), which have batteries (3) for the operating current of the drive unit (4) of the electric vehicle (2),
**characterized by**
a completely closable sack (5) made of fireproof textile material (6) with an opening (7) for receiving the electric vehicle (2), wherein in the closed state the sack (5) forms a barrier for solid particles and is nonetheless completely or partially permeable for gases or fluids and wherein the textile material (6) has reactive components, which release firefighting aerosol and/or firefighting liquid into the interior space (11) of the sack (5) starting at a temperature of 150°C.

2. The safety container (1) according to claim 1, **characterized in**
**that** the inner side (12) of the sack (5) is impregnated with one or several hydrogen fluoride-naturalizing substances.

3. The safety container (1) according to one of the preceding claims,
**characterized in**
**that** the textile material (6) has non-woven material at least in the region(s) of the barrier, which is/are permeable for gases or fluids.

4. The safety container (1) according to one of the preceding claims,
**characterized in**
**that** the textile material (6) has a fiberglass-silicate fabric.

5. The safety container (1) according to one of the preceding claims,
**characterized in**
**that** the textile material (6) has three layers (8, 9, 10).

6. The safety container (1) according to claim 5, **characterized in**
**that** the middle (9) one of the three layers (8, 9, 10) has non-woven material.

7. The safety container (1) according to one of the preceding claims,
**characterized in**
**that** the sack (5) has a reinforced bottom surface (13), which is dimensioned to be larger than the standing surface (14) of the electric vehicle (2), which is delimited by the support points of the vehicle tires.

8. The safety container (1) according to one of the preceding claims,
**characterized in**
**that** in the closed state of the opening (7), the edges thereof lie so as to be rolled up one on top of the other in the same direction.

9. The safety container (1) according to one of the preceding claims,
**characterized in**
**that** the sack (5) has at least one seam (15) with Kevlar^{®}-covered steel threads.

10. The safety container (1) according to one of the preceding claims,
**characterized in**
**that** the sack (5) has attachment points (16), such as, for example, hooks or eyes, for loading means and a load-bearing capacity for loads of 5000 kg or more, wherein the textile material (6) is designed in a tear-resistant manner at least up to a loading on the sack (5) with 5000 kg.

11. The safety container (1) according to one of the preceding claims,
**characterized in**
**that** the textile material (6) has an elastic extensibility of 10 percent or more.

12. The safety container (1) according to one of the preceding claims,
**characterized in**
**that** the sack (5) has an abrasion-resistant outer coating, in particular a bottom-side, cut-resistant rubber coating.

13. A method for securing dangerous freight, in particular defective or crashed electric vehicles (2),
**characterized by** the following steps:
i) providing a safety container (1);
according to one of claims 1 to 12:
ii) opening the safety container (1);
(iii) placing an electric vehicle (2) into the safety container (1);
(iv) closing the safety container (1).

14. The method according to claim 13,
**characterized by** the following additional step between step iii) and iv):
iii)a filling the safety container (1) with inert gas.

## Revendications

1. Contenant de sécurité (1), destiné à des véhicules électriques (2) défectueux ou accidentés, qui comportent des accumulateurs (3) pour le courant de service de l'unité d'entraînement (4) du véhicule électrique (2),
**caractérisé par**
un sac (5) totalement fermable, en une matière textile (6) ignifuge, pourvu d'une ouverture (7), destinée à recevoir le véhicule électrique (2), lorsqu'il est fermé, le sac (5) formant une barrière contre des particules solides, tout en restant totalement ou par endroits perméable aux gaz ou aux fluides et la matière textile (6) comportant des composants réactifs, qui à partir d'une température de 150 °C libèrent dans l'espace intérieur (11) du sac (5) un aérosol de lutte contre l'incendie et / ou un liquide de lutte contre l'incendie.

2. Contenant de sécurité (1) selon la revendication 1, **caractérisé**
**en ce que** la face intérieure (12) du sac (5) est imprégnée d'une ou de plusieurs substances de neutralisation du fluorure d'hydrogène.

3. Contenant de sécurité (1) selon l'une quelconque des revendications précédentes,
**caractérisé**
**en ce qu'**au moins dans la ou dans les zones perméables aux gaz ou aux fluides de la barrière, la matière textile (6) comporte une matière non-tissée.

4. Contenant de sécurité (1) selon l'une quelconque des revendications précédentes,
**caractérisé**
**en ce que** la matière textile (6) comporte un tissu en fibres de verre - silicate.

5. Contenant de sécurité (1) selon l'une quelconque des revendications précédentes,
**caractérisé**
**en ce que** la matière textile (6) comporte trois couches (8, 9, 10).

6. Contenant de sécurité (1) selon la revendication 5, **caractérisé**
**en ce que** la centrale (9) des trois couches (8, 9, 10) comporte une matière non-tissée.

7. Contenant de sécurité (1) selon l'une quelconque des revendications précédentes,
**caractérisé**
**en ce que** le sac (5) comporte une surface de fond inférieur (13) rigidifiée, dont le dimensionnement est supérieur à la surface d'appui au sol (14) du véhicule électrique (2), délimitée par les points de support des pneus du véhicule.

8. Contenant de sécurité (1) selon l'une quelconque des revendications précédentes,
**caractérisé**
**en ce que** lorsque l'ouverture (7) est fermée, ses bords sont superposés, en étant enroulés dans la même direction.

9. Contenant de sécurité (1) selon l'une quelconque des revendications précédentes,
**caractérisé**
**en ce que** le sac (5) comporte au moins une couture (15) en fils d'acier enrobés de Kevlar.

10. Contenant de sécurité (1) selon l'une quelconque des revendications précédentes,
**caractérisé**
**en ce que** le sac (5) comporte des points de butée (16), comme par exemple des crochets ou des œillets pour des moyens de charge et fait preuve d'une capacité de portance pour des charges de 5000 kg ou plus, la matière textile (6) étant conçue pour être indéchirable au moins jusqu'à une contrainte du sac (5) avec 5000 kg.

11. Contenant de sécurité (1) selon l'une quelconque des revendications précédentes,
**caractérisé**
**en ce que** la matière textile (6) fait preuve d'une extensibilité élastique de 10 pour cent ou plus.

12. Contenant de sécurité (1) selon l'une quelconque des revendications précédentes,
**caractérisé**
**en ce que** le sac (5) comporte un revêtement extérieur résistant à l'abrasion, notamment un engommage résistant aux coupures, du côté du fond inférieur.

13. Procédé, destiné à sécuriser des produits de chargement dangereux, notamment des véhicules électriques (2) défectueux ou accidentés,
**caractérisé par** les étapes suivantes, consistant à :
i) mettre à disposition un contenant de sécurité (1) ;
selon l'une quelconque des revendications 1 à 12 ;
ii) ouvrir le contenant de sécurité (1) ;
iii) introduire un véhicule électrique (2) dans le contenant de sécurité (1);
iv) fermer le contenant de sécurité (1).

14. Procédé selon la revendication 13,
**caractérisé par** l'étape additionnelle suivante, entre l'étape iii) et iv) :
iii)a remplir le contenant de sécurité (1) avec un gaz inerte.
